# NEUE EUROPÄISCHE PATENTSCHRIFT

(11) **EP 0 898 535 B2**
(45) Veröffentlichungstag und Bekanntmachung des Hinweises auf die Entscheidung über den Einspruch: **03.12.2003**
(45) Hinweis auf die Patenterteilung: 01.03.2000
(21) Anmeldenummer: 97923789.8
(22) Anmeldetag: 03.05.1997
(51) Int. Cl.: B61D 17/04, B62D 29/04, B62D 31/02

(54) **WAGENKASTEN EINES SCHIENENFAHRZEUGES**
COACH BODY OF RAILWAY VEHICLE
CAISSE DE VEHICULE FERROVIAIRE

(30) Priorität: 13.05.1996 DE 19619212
(43) Veröffentlichungstag der Anmeldung: 03.03.1999
(73) Patentinhaber: SIEMENS AKTIENGESELLSCHAFT, 80333 München (DE)
(72) Erfinder: SCHRÖDER, Karl-Josef, D-40627 Düsseldorf (DE); MÜHLHAHN, Dieter, D-40764 Langenfeld (DE); KOEPPE, Matthias, D-52428 Jülich (DE)
(86) Internationale Anmeldenummer: DE9700930
(87) Internationale Veröffentlichungsnummer: WO97043158

(56) Entgegenhaltungen:
- EP-A- 0 369 134
- EP-A- 0 602 259
- DE-A- 1 630 595
- DE-A- 2 936 866
- DE-B- 1 158 541
- DE-C- 647 370
- DE-U- 8 807 208
- FR-A- 2 698 601
- GB-A- 2 050 275
- US-A- 4 283 086

## Beschreibung

Die Erfindung betrifft einen Wagenkasten eines Schienenfahrzeuges, der im wesentlichen aus horizontalen und vertikalen Wandungen besteht, wobei die horizontalen Wandungen dem Bilden eines Bodens sowie eines Daches dienen und die vertikalen, insbesondere Seitenwände bildenden Wandungen den Einbau mindestens eines Fensters und einer Einstiegstür zulassende Ausschnitte enthalten, wobei die horizontalen und vertikalen Wandungen durch im Schnitt quer zur Fahrzeuglängsachse hälftige Module aus faserverstärktem Kunststoff gebildet sind, wobei jeweils zwei dieser komplementär angeordneten und an ihren in der Fahrzeugquermitte zusammentreffenden horizontalen Wandungen kraftübertragend verbundenen hälftigen Module eine Längssektion des Wagenkastens darstellen, wobei die Länge des Wagenkastens durch kraftübertragendes Verbinden einer Anzahl vorgenannter Längssektionen an ihren in Fahrzeugquerrichtung umlaufenden Stoßstellen entsprechend auslegbar ist.

Bei Schienenfahrzeugen ist es allgemein bekannt, die horizontalen und vertikalen Wandungen des Wagenkastens in geschweißter Stahlbauweise aus Walz-, Kant- und Hohlprofilen mit einer direkt auf ein solches Gerippe aufgeschweißten Beblechung auszuführen. Ein derartiger Wagenkasten entspricht hinsichtlich seiner Gestaltung, z. B. durch die Anzahl und Anordnung von Fenstern und Einstiegstüren, in der Regel nur einem bestimmten Anwendungsfall. Änderungen dieser Gestaltung, beispielsweise durch eine andere Platzierung der Einstiegstüren, bedeuten ein neues statisches Konzept und häufig umfangreiche konstruktive Anpassungen. Die besagte Stahlbauweise eines Wagenkastens ist im übrigen in der Herstellung aufwendig und unter dem Gesichtspunkt einer höheren Fahrzeugmasse ungünstig.

Durch die DE-B-1 158 541 gehört weiter ein Wagenkasten eines Schienenfahrzeuges zum Stand der Technik, der im wesentlichen aus horizontalen und vertikalen Wandungen besteht. Dabei dienen die horizontalen Wandungen dem Bilden eines Bodens sowie eines Daches. Die vertikalen Wandungen, die insbesondere Seitenwände bilden, enthalten Ausschnitte, die den Einbau von Fenstern und Einstiegstüren zulassen. Die horizontalen und vertikalen Wandungen sind durch im Schnitt quer zur Fahrzeuglängsachse hälftige Module aus faserverstärktem Kunststoff gebildet, wobei diese Module jeweils eine Baulänge aufweisen, die der Länge des Wagenkastens entspricht. Dadurch sind sehr große Vorrichtungen zur Herstellung erforderlich (siehe Fig. 13 der DE-B-1 158 541).

Gemäß der DE 8 807 208 U ist ein Kunststoff-Wagenkasten für einen Omnibus aus zwei Halbschalen gebildet, die entlang der Längsmittelebene des Wagenkastens miteinander verbunden sind. Jede Halbschale besteht ihrerseits aus einem Vorderteil, einem Rückteil und einer beliebigen Anzahl dazwischen eingesetzter Zwischenteile. Auch diese Einzelteile sind längs der Stoßlinien miteinander verbunden. Durch die Anzahl der Zwischenteile kann die Länge des Wagenkastens verändert werden.

Der Erfindung liegt die Aufgabe zugrunde, einen Wagenkasten der gattungsgemäßen Art im Sinne einer möglichst einfachen, kostengünstigen Herstellung und einer Reduzierung der Fahrzeugmasse auszubilden, wobei der Wagenkasten ein hohes Maß an Flexibilität bei der Gestaltung des Schienenfahrzeuges ermöglichen soll.

Diese Aufgabe wird erfindungsgemäß dadurch gelöst, dass die hälftigen Module im Bereich der dachseitigen und/oder der bodenseitigen horizontalen Wandungen rechteckförmige Hohlräume oder Nuten aufweisen, die jeweils einen in Länge des Wagenkastens durchlaufenden, mit Zug-, Druck- und Biegekräften beanspruchbaren Gurt aufnehmen.

Vorteilhafte Ausgestaltungen der Erfindung sind in den Unteransprüchen angegeben.

Die mit dem Gegenstand nach der Erfindung erzielbaren Vorteile bestehen insbesondere in folgendem:
Im Hinblick auf den statischen Aufbau des Wagenkastens liegt eine Trennung vor zwischen Zug- und Drucklasten, die mit Hilfe der durchgehenden Gurte übertragen werden, und Schublasten, deren Übertragung durch die Module erfolgt. Die hälftigen Module ermöglichen eine hohe Flexibilität bei der Fahrzeuggestaltung, in dem jede gewünschte Konfiguration eines Wagenkastens in dessen Längs- und Querrichtung realisiert werden kann. Die relativ kurzen hälftigen Module aus faserverstärktem Kunststoff sind einfach und kostengünstig herstellbar, wobei kompakte, handliche Einrichtungen für die Produktion verwendet werden können. Zum Einsparen der Herstellungskosten des Wagenkastens trägt bei, dass eine Innenverkleidung der Module und eine Behandlung der Außenflächen durch großflächiges Auftragen einer Spachtelschicht entfallen können. Weiter günstig ergibt sich eine Reduzierung der Fahrzeugmasse, wodurch auch Energiekosten im Fahrbetrieb eingespart werden. Die Module aus faserverstärktem Kunststoff sind frei von Korrosion und damit ohne Wartungsaufwand einzusetzen.

Die Erfindung wird im weiteren anhand eines Ausführungsbeispiels näher beschrieben, das in der Zeichnung prinzipartig dargestellt ist. Es zeigen
- Fig. 1: ein Schienenfahrzeug mit einem erfindungsgemäßen Wagenkasten in Seitenansicht,
- Fig. 2: einen Abschnitt eines Wagenkastens nach der Erfindung in perspektivischer Darstellung,
- Fig. 3: den Schnitt nach der Linie A-A in Fig. 2,
- Fig. 4: den Schnitt nach der Linie B-B in Fig. 2,
- Fig. 5: eine alternative Gestaltung in einem der Fig. 3 ähnlichen Schnitt.

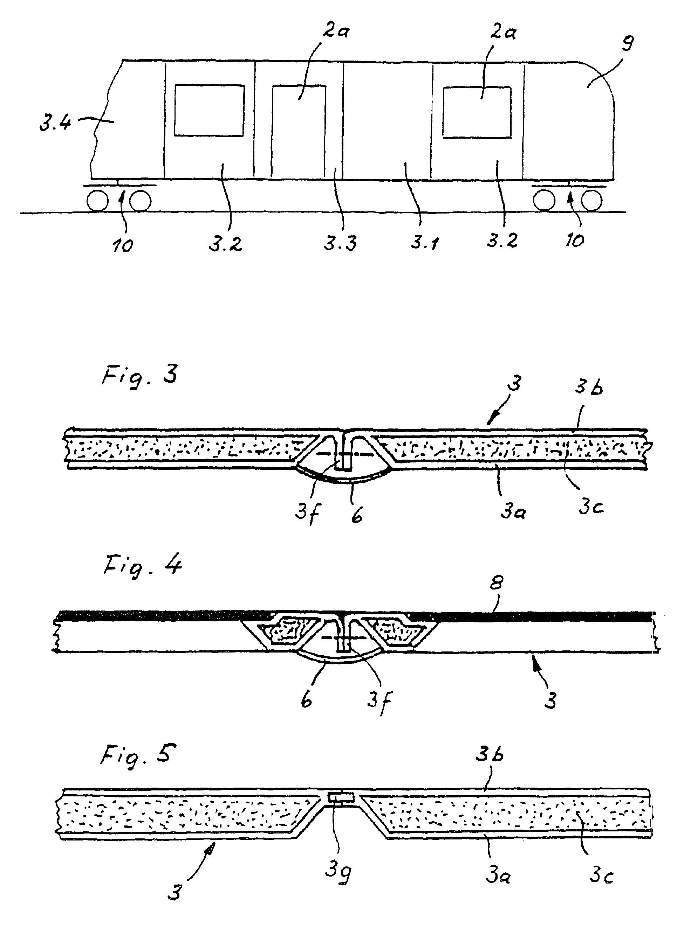

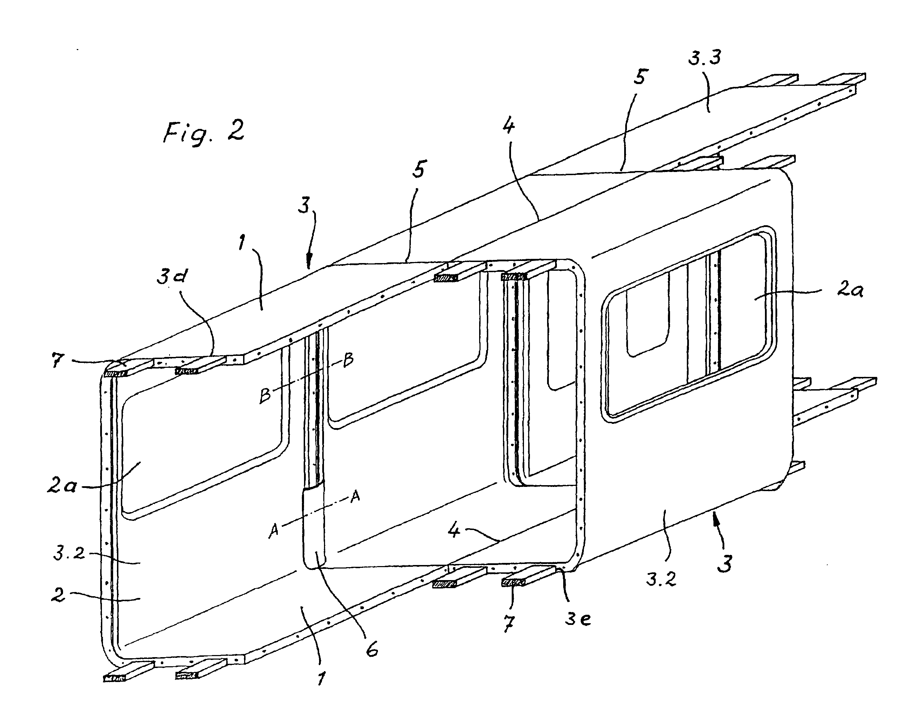

Gemäß Fig. 1 und 2 ist der auf angetriebenen oder antriebslosen Fahrgestellen 10 abgestützte Wagenkasten aus relativ kurzen hälftigen Modulen 3 zusammengesetzt, die jeweils aus faserverstärktem Kunststoff bestehen. Der Boden sowie das Dach des Wagenkastens sind durch horizontale Wandungen 1 und die Seitenwände durch vertikale Wandungen 2 dieser Module 3 gebildet. Jeweils zwei dieser komplementär angeordneten hälftigen Module 3, die an ihren in der Fahrzeugquermitte 4 zusammentreffenden horizontalen Wandungen 1 kraftübertragend verbunden sind, stellen eine Längssektion des Wagenkastens dar. Die Länge des Wagenkastens ergibt sich durch kraftübertragendes Verbinden einer entsprechenden Anzahl der vorgenannten Längssektionen an ihren in Fahrzeugquerrichtung umlaufenden Stoßstellen 5.

Die vertikalen Wandungen 2 enthalten Ausschnitte 2a, die den Einbau eines Fensters - beispielsweise in Form einer nach Fig. 4 eingesetzten Glasscheibe 8 - oder einer Einstiegstür zulassen. Der Ausschnitt 2a in dervertikalen Wandung 2 für den Einbau einer Einstiegstür kann durch eine Ausnehmung (nicht dargestellt) innerhalb der horizontalen Wandung 1 ergänzt werden, um dort eine Trittstufen-Baugruppe unterzubringen. Außer den vorbeschriebenen Fenstermodulen 3.2 und Türmodulen 3.3 können wahlweise vollflächige Module 3.1 und ein Modul 3.4 als Übergang zu einem Gelenk eines Zugverbandes eingesetzt werden. Weiter besteht die Möglichkeit, ein in Fig. 1 gezeigtes Kopfteil 9, das ebenfalls aus faserverstärktem Kunststoff gebildet sein kann, durch ein zweites Gelenkmodul 3.4 oder umgekehrt das Gelenkmodul 3.4 durch ein zweites Kopfmodul 9 zu ersetzen. Mit Hilfe der vorbeschriebenen Module 3.1 bis 3.4 ist jede gewünschte Konfiguration eines Wagenkastens in Längsrichtung und in Querrichtung ohne weiteres realisierbar, z. B. kann eine Längsseite des Wagenkastens nur Fenstermodule 3.2 aufweisen und die gegenüberliegende Längsseite zwei Türmodule 3.3 in Kombination mit Fenstermodulen 3.2 enthalten.

Im vorliegenden Ausführungsbeispiel weisen die Module 3 im Bereich der dachseitigen horizontalen Wandungen 1 rechteckförmige Hohlräume 3d auf. Im Bereich der bodenseitigen horizontalen Wandungen 1 sind die Module 3 mit entsprechenden Nuten 3e versehen. Die Hohlräume 3d und Nuten 3e nehmen jeweils einen in Länge des Wagenkastens durchlaufenden Gurt 7 auf, der mit Zug- und Druckkräften sowie auch Biegekräften beanspruchbar ist. Der Gurt 7 kann aus einem Metallprofil oder vorzugsweise aus faserverstärktem Kunststoff mit in Längsrichtung orientierten Endlosfasern bestehen und beispielsweise durch Pultrusion hergestellt werden. Im Hinblick auf den statischen Aufbau des Wagenkastens liegt eine Trennung vor zwischen Zug- und Drucklasten, die mit Hilfe der durchgehenden Gurte 7 übertragen werden, und Schublasten, deren Übertragung durch die Module 3 erfolgt.

Wie die Fig. 3 bis 5 veranschaulichen, sind die Module 3 aus einer inneren Schicht 3a aus faserverstärktem Kunststoff, einer ebensolchen äußeren Schicht 3b sowie einer zwischen diesen Schichten angeordneten Kernschicht 3c mit guten Eigenschaften in bezug auf Wärme- und Schallisolierung gebildet. Als Kernschicht 3c eignen sich verschiedene Leichtbaustoffe, wie Balsaholz, Schäume, Waben. Der faserverstärkte Kunststoff enthält als Matrixwerkstoff wahlweise Epoxidharze, ungesättigte Polyesterharze, Vinylesterharze oder Phenolharze. Als Verstärkungsmaterial können Glas-, Kohlenstoff-, Aramid- und/oder andere Verstärkungsfasern eingesetzt werden, wobei sich die Auswahl des Fasermaterials nach der jeweiligen lokalen Belastung der Module 3 richten kann. Es versteht sich, daß der faserverstärkte Kunststoff den jeweils geltenden Brandschutzbestimmungen entspricht. Für die Herstellung der Module 3 empfiehlt sich die Injektionstechnik, weil dadurch innen und außen glatte, fertige Oberflächen erzielbar sind. Auf eine bei metallischen Wagenkästen übliche Innenverkleidung und auf ein großflächiges Spachteln der Außenflächen vor dem Lackieren kann also verzichtet werden.

Jedes hälftige Modul 3 ist in seinem mit anderen Modulen kraftübertragend zu verbindenden Bereich entsprechend der Fügetechnik durch Schrauben, Nieten und/oder Kleben gestaltet. Dazu sind gemäß Fig. 3 bis 5 die innere Schicht 3a und die äußere Schicht 3b zusammengeführt, wobei nach Fig. 3 und 4 eine für das Verbinden durch Schrauben, Nieten und Kleben nutzbare Abwinkelung 3f gebildet ist. Nach Fig. 5 erfolgt das Verbinden allein durch Kleben unter Einsatz einer Verstärkungsleiste 3g.

Die in Fahrzeugquerrichtung umlaufende Stoßstelle 5 von zwei Längssektionen kann durch eine in Fig. 2 bis 4 dargestellte Leiste 6 verkleidet werden, von der in Fig. 2 nur ein Abschnitt gezeigt ist. Die in Fahrzeugquerrichtung umlaufende Stoßstelle 5 ist aufgrund ihrer Stabilität zugleich für das Befestigen von Ausstattungsteilen des Fahrzeuges nutzbar, beispielsweise einer Trennwand, eines Fahrgastsitzes oder einer Haltestange. Der durch die Leiste 6 abgedeckte Hohlraum im Bereich der Stoßstelle 5 ist zur Aufnahme von Versorgungsleitungen, wie Kabeln und Rohren, geeignet. Weiter können die hälftigen Module 3 nicht gezeichnete Schächte für derartige Versorgungsleitungen enthalten.

### Liste der Bezugszeichen

- 1: horizontale Wandung
- 2: vertikale Wandung
- 2a: Ausschnitt für Fenster oder Einstiegstür
- 3: hälftiges Modul aus faserverstärktem Werkstoff
- 3.1: vollflächiges Modul
- 3.2: Modul mit Fensterausschnitt (Fenstermodul)
- 3.3: Modul mit Türausschnitt (Türmodul)
- 3.4: Modul als Übergang zu einem Gelenk eines Zugverbandes (Gelenkmodul)
- 3a: innere Schicht
- 3b: äußere Schicht
- 3c: Kernschicht
- 3d: rechteckförmiger Hohlraum
- 3e: rechteckförmige Nut
- 3f: Abwinkelung
- 3g: Verstärkungsleiste
- 4: Fahrzeugquermitte
- 5: Stoßstelle, in Fahrzeugquerrichtung umlaufend
- 6: Leiste
- 7: Gurt
- 8: Glasscheibe
- 9: Kopfteil
- 10: Fahrgestell

## Patentansprüche

1. Wagenkasten eines Schienenfahrzeuges, der im wesentlichen aus horizontalen und vertikalen Wandungen (1, 2) besteht, wobei die horizontalen Wandungen (1 ) dem Bilden eines Bodens sowie eines Daches dienen und die vertikalen, insbesondere Seitenwände bildenden Wandungen (2) den Einbau mindestens eines Fensters und einer Einstiegstür zulassende Ausschnitte (2a) enthalten, wobei die horizontalen und vertikalen Wandungen (1, 2) durch im Schnitt quer zur Fahrzeuglängsachse hälftige Module (3) aus faserverstärktem Kunststoff gebildet sind, wobei jeweils zwei dieser komplementär angeordneten und an ihren in der Fahrzeugquermitte (4) zusammentreffenden horizontalen Wandungen (1 ) kraftübertragend verbundenen hälftigen Module (3) eine Längssektion des Wagenkastens darstellen, wobei die Länge des Wagenkastens durch kraftübertragendes Verbinden einer Anzahl vorgenannter Längssektionen an ihren in Fahrzeugquerrichtung umlaufenden Stoßstellen (5) entsprechend auslegbar ist, **dadurch gekennzeichnet, dass** die hälftigen Module (3) im Bereich der dachseitigen und/oder der bodenseitigen horizontalen Wandungen (1 ) rechteckförmige Hohlräume (3d) oder Nuten (3e) aufweisen, die jeweils einen in Länge des Wagenkastens durchlaufenden, mit Zug-, Druck- und Biegekräften beanspruchbaren Gurt (7) aufnehmen.

2. Wagenkasten nach Anspruch 1, **dadurch gekennzeichnet, dass** wahlweise lediglich vier Typen der hälftigen Module (3) eingesetzt werden, nämlich ein vollflächiges Modul (3.1), ein Modul (3.2) mit Fensterausschnitt, ein Modul (3.3) mit Türausschnitt und ein Modul (3.4) als Übergang zu einem Gelenk eines Zugverbandes, beispielsweise eines Stadtbahn-Gelenkfahrzeuges.

3. Wagenkasten nach Anspruch 1 oder 2, **dadurch gekennzeichnet, dass** die hälftigen Module (3) aus einer inneren Schicht (3a) und einer äußeren Schicht (3b) sowie einer zwischen diesen Schichten (3a, 3b) angeordneten Kernschicht (3c) mit guten Eigenschaften in bezug auf Wärme- und Schallisolierung gebildet sind, wobei die innere Schicht (3a) und die äußere Schicht (3b) aus faserverstärktem Kunststoff bestehen.

4. Wagenkasten nach einem der Ansprüche 1 bis 3, **dadurch gekennzeichnet, dass** der faserverstärkte Kunststoff als Matrixwerkstoff wahlweise Epoxidharze, ungesättigte Polyesterharze, Vinylesterharze oder Phenolharze enthält.

5. Wagenkasten nach einem der Ansprüche 1 bis 4, **dadurch gekennzeichnet, dass** der faserverstärkte Kunststoff Glas-, Kohlenstoff-, Aramid- und/oder Naturfasern aufweist.

6. Wagenkasten nach einem der Ansprüche 1 bis 5, **dadurch gekennzeichnet, dass** die hälftigen Module (3) in Injektionstechnik hergestellt sind.

7. Wagenkasten nach einem der Ansprüche 1 bis 6, **dadurch gekennzeichnet, dass** jedes hälftige Modul (3) in seinem mit anderen Modulen (3) kraftübertragend zu verbindenden Bereich entsprechend der Fügetechnik durch Schrauben, Nieten und/oder Kleben gestaltet ist.

8. Wagenkasten nach einem der Ansprüche 1 bis 7, **dadurch gekennzeichnet, dass** die in Fahrzeugquerrichtung umlaufende Stoßstelle (5) von zwei Längssektionen durch eine Leiste (6) verkleidet ist.

9. Wagenkasten nach einem der Ansprüche 1 bis 8, **dadurch gekennzeichnet, dass** die in Fahrzeugquerrichtung umlaufende Stoßstelle (5) von zwei Längssektionen zugleich für das Befestigen von Ausstattungsteilen des Fahrzeuges genutzt wird, beispielsweise einer Trennwand, eines Fahrgastsitzes oder einer Haltestange.

10. Wagenkasten nach Anspruch 9, **dadurch gekennzeichnet, dass** der Gurt (7) aus faserverstärktem Kunststoff mit in Längsrichtung orientierten Endlosfasern besteht.

11. Wagenkasten nach einem der Ansprüche 1 bis 10, **dadurch gekennzeichnet, dass** die hälftigen Module (3) mit Schächten zur Aufnahme von Versorgungsleitungen, insbesondere Kabeln, versehen sind.

## Claims

1. A coach body of a rail vehicle, substantially comprising horizontal and vertical panels (1, 2), wherein the horizontal panels (1) serve to form a floor and a roof, and the vertical panels (2), in particular forming side walls, contain apertures (2a) allowing the installation of at least one window and one access door, wherein the horizontal and vertical panels (1, 2) are formed by split modules (3) comprising fibre-reinforced plastic and cut transversely to the longitudinal axis of the vehicle, wherein two of these complementary split modules (3), joined in a load-transmitting manner along their horizontal panels (1) in the transverse middle (4) of the vehicle, form a respective longitudinal section of the coach body, wherein the length of the coach body can be built up as necessary by the load-transmitting connection of a plurality of the aforementioned longitudinal sections along their abutments (5) extending in the transverse direction of the vehicle, **characterised in that** the split modules (3) have rectangular recesses (3d) or slots (3e) provided in the region of the horizontal roof and/or floor panels (1) and each receiving a strut (7) extending in the longitudinal direction of the coach body and subjectable to tensile, compressive and bending forces.

2. A coach body according to claim 1, **characterised in that** optionally only four types of split module (3) are used, namely a solid module (3.1), a module (3.2) with a window aperture, a module (3.3) with a door aperture and a module (3.4) forming a transition to an articulation of a train formation, for example of an articulated suburban rail vehicle.

3. A coach body according to claim 1 or 2, **characterised in that** the split modules (3) are formed from an inner layer (3a), an outer layer (3b) and a core layer (3c) arranged therebetween having good heat-insulating and sound-insulating properties, the inner layer (3a) and the outer layer (3b) comprising fibre-reinforced plastic.

4. A coach body according to any one of claims 1 to 3, **characterised in that** the fibre-reinforced plastic contains epoxy resins, unsaturated polyester resins, vinyl ester resins or phenol resins as matrix material.

5. A coach body according to any one of claims 1 to 4, **characterised in that** the fibre-reinforced plastic contains glass, carbon, aramide and/or natural fibres.

6. A coach body according to any one of claims 1 to 5, **characterised in that** the split modules (3) are manufactured by an injection process.

7. A coach body according to any one of claims 1 to 6, **characterised in that** each split module (3), in its region to be joined to other modules (3) in a load-transmitting manner, is constructed by bolting, riveting and/ or gluing in accordance with joining technology.

8. A coach body according to any one of claims 1 to 7, **characterised in that** the abutment (5) between two longitudinal sections and extending in the transverse direction of the vehicle is covered by a strip (6).

9. A coach body according to any one of claims 1 to 8, **characterised in that** the abutment (5) between two longitudinal sections and extending in the transverse direction of the vehicle is also used for fixing vehicle fittings, for example a partition, a passenger seat or a handrail.

10. A coach body according to claim 9, **characterised in that** the strut (7) comprises fibre-reinforced plastic with continuous fibres orientated in the longitudinal direction.

11. A coach body according to any one of claims 1 to 10, **characterised in that** the split modules (3) are provided with ducts for receiving supply lines, in particular cables.

## Revendications

1. Caisse de véhicule ferroviaire composée principalement de parois (1, 2) horizontales et verticales, les parois horizontales (1) servant à la formation d'un fond et d'un toit, et les parois verticales (2), formant notamment les parois latérales, comportant des découpes (2a) permettant le montage d'au moins une fenêtre et d'une porte d'entrée, les parois horizontales et verticales (1, 2) étant formées par des demi-modules (3) en coupe transversale par rapport à l'axe longitudinal du véhicule et composés de matière synthétique renforcée par fibres, deux de ces demi-modules (3) placés de façon complémentaire et raccordés en transmission de force à leurs parois horizontales (1) se rencontrant au milieu transversal du véhicule (4) formant respectivement une section longitudinale de la caisse du véhicule, la longueur de la caisse du véhicule peut être conçue de façon correspondante par le raccordement en transmission de force d'un nombre de sections longitudinales citées plus haut à leurs zones d'aboutement périphériques (5) dans le sens transversal du véhicule,
**caractérisée en ce que** les demi-modules (3) présentent, dans la partie des parois horizontales (1 ) du côté du toit et/ou du fond, des espaces creux (3d) rectangulaires ou des rainures (3e) qui logent respectivement une membrure (7) traversant la longueur de la caisse du véhicule, cette membrure pouvant être chargée par des forces de traction, de pression et de pliage.

2. Caisse de véhicule ferroviaire selon la revendication 1, **caractérisée en ce que** seulement quatre types de demi-modules (3) peuvent être utilisés au choix, à savoir un module en surface pleine (3.1), un module (3.2) avec une découpe de fenêtre, un module (3.3) avec une découpe de porte et un module (3.4) de passage au-dessus d'une articulation d'un ensemble ferroviaire, par exemple d'un véhicule ferroviaire articulé urbain.

3. Caisse de véhicule ferroviaire selon la revendication 1 ou 2, **caractérisée en ce que** les demi-modules (3) sont formés d'une couche intérieure (3a) et d'une couche extérieure (3b) ainsi que d'une couche centrale (3c) placée entre ces deux couches (3a, 3b), ayant de bonnes propriétés quant à l'isolation thermique et phonique, la couche intérieure (3a) et la couche extérieure (3b) étant composées de matière plastique renforcée par fibres.

4. Caisse de véhicule ferroviaire selon l'une des revendications 1 à 3, **caractérisée en ce que** la matière plastique renforcée par fibres contient comme matière matricielle, au choix, des résines époxy, des résines polyester insaturées, des résines d'esters vinyliques ou des résines phénoliques.

5. Caisse de véhicule ferroviaire selon l'une des revendications 1 à 4, **caractérisée en ce que** la matière plastique renforcée par fibres présente des fibres de verre, de carbone, d'aramide et/ou des fibres naturelles.

6. Caisse de véhicule ferroviaire selon l'une des revendications 1 à 5, **caractérisée en ce que** les demi-modules (3) sont fabriqués par technique d'injection.

7. Caisse de véhicule ferroviaire selon l'une des revendications 1 à 6, **caractérisée en ce que** chaque demi-module (3), dans sa partie à raccorder à d'autres modules (3) par transmission de force, est conçu de façon correspondante à la technique d'assemblage par vissage, rivetage et/ou collage.

8. Caisse de véhicule ferroviaire selon l'une des revendications 1 à 7, **caractérisée en ce que** la zone d'aboutement périphérique (5) dans le sens transversal du véhicule de deux sections longitudinales est revêtue par une baguette (6).

9. Caisse de véhicule ferroviaire selon l'une des revendications 1 à 8, **caractérisée en ce que** la zone d'aboutement périphérique (5) en sens transversal du véhicule de deux sections longitudinales est utilisée en même temps pour la fixation de pièces d'équipement du véhicule, par exemple d'un mur de séparation, d'un siège de passager ou d'une barre de maintien.

10. Caisse de véhicule ferroviaire selon la revendication 9, **caractérisée en ce que** la membrure (7) est composée de matière plastique renforcée par fibres avec des fibres continues orientées dans le sens de la longueur.

11. Caisse de véhicule ferroviaire selon l'une des revendications 1 à 10, **caractérisée en ce que** les demi-modules (3) sont munis de gaines pour loger des lignes d'alimentation, notamment des câbles.
